# EUROPÄISCHE PATENTANMELDUNG

(11) **EP 1 609 590 A1**
(43) Veröffentlichungstag der Anmeldung: **28.12.2005**
(21) Anmeldenummer: 04014630.0
(22) Anmeldetag: 22.06.2004
(51) Int. Cl.: B32B 1/08, B32B 27/08, F16L 11/10, F16L 11/08

(54) **Kunststoffrohr, Verfahren zur Herstellung eines Kunststoffrohres und Verwendung eines Kunststoffrohres**

(71) Anmelder: TI Automotive (Heidelberg) GmbH, 69123 Heidelberg (DE)
(72) Erfinder: Sausner, Andreas, Dipl.-Ing., 60389 Frankfurt (DE); Fiedler, Uwe, Dipl.-Ing., 68766 Hockenheim (DE); Zimmer, Werner, Dipl.-Ing., 34212 Melsungen (DE); Fahrenholz, Frank, 34128 Kassel (DE)
(74) Vertreter: Rohmann, Michael

(57) **Zusammenfassung**

Kunststoffrohr, insbesondere als Bremsleitung in Kraftfahrzeugen, mit einer Innenschicht aus einem ersten thermoplastischen schmelzextrudierbarem Kunststoff und mit einer Außenschicht aus einem zweiten thermoplastischen schmelzextrudierbarem Kunststoff. Außerdem ist ein die Außenschicht umgebender Armierungsmantel aus sich kreuzenden und/oder sich überlappenden Armierungssträngen vorgesehen.

## Beschreibung

Die Erfindung betrifft ein Kunststoffrohr, das insbesondere als Bremsleitung in Kraftfahrzeugen eingesetzt wird. Die Erfindung betrifft fernerhin ein Verfahren zur Herstellung eines Kunststoffrohres. Weiterhin bezieht sich die Erfindung auf die Verwendung eines Kunststoffrohres als Bremsleitung in Kraftfahrzeugen. Bremsleitung meint im Rahmen der Erfindung insbesondere eine Schlauchleitung für Bremsflüssigkeit.

Aus der Praxis sind flexible Kunststoffrohre bzw. flexible Kunststoffschläuche bekannt, die als Bremsleitungen in Kraftfahrzeugen eingesetzt werden und die aus einer Kunststoffschicht sowie einem auf der Kunststoffschicht angeordneten Armierungsmantel bestehen. Die innere Kunststoffschicht dieses Kunststoffrohres besteht dabei aus PTFE (Polytetrafluorethylen). Nach relativ aufwendigen Vorbereitungsschritten wird diese Kunststoffschicht kalt extrudiert und anschließend ist ein Sintern dieser Schicht erforderlich. Diese Verfahrensweise ist aufwendig und kostspielig. Es sind mehrere Verarbeitungsschritte erforderlich und eine kontinuierliche Herstellung des Kunststoffrohres ist nicht möglich. Deshalb ist dieses Herstellungsverfahren auch relativ zeitaufwendig.

Demgegenüber liegt der Erfindung das technische Problem zugrunde, ein Kunststoffrohr der eingangs genannten Art anzugeben, das auf einfache und wenig aufwendige Weise zügig herstellbar ist und das sich durch hervorragende mechanische Eigenschaften und insbesondere durch eine gute Innendruckbeständigkeit auszeichnet. Der Erfindung liegt weiterhin das technische Problem zugrunde, ein Verfahren zur Herstellung eines solchen Kunststoffrohres anzugeben sowie eine Verwendung dieses Kunststoffrohres anzugeben.

Zur Lösung des technischen Problems lehrt die Erfindung zunächst ein Kunststoffrohr, insbesondere als Bremsleitung in Kraftfahrzeugen, mit einer Innenschicht aus einem ersten thermoplastischen schmelzextrudierbaren Kunststoff, mit einer Außenschicht aus einem zweiten thermoplastischen schmelzextrudierbarem Kunststoff und mit einem die Außenschicht umgebenden äußeren Armierungsmantel aus sich kreuzenden und/oder sich überlappenden Armierungssträngen.

Bei dem erfindungsgemäßen Kunststoffrohr handelt es sich insbesondere um ein flexibles Kunststoffrohr bzw. um einen flexiblen Kunststoffschlauch. Zweckmäßigerweise hat das Kunststoffrohr einen kreisförmigen Querschnitt. Mit dem Begriff Kunststoffrohr ist nicht gemeint, dass das Kunststoffrohr ausschließlich aus Kunststoff bestehen muss. Vielmehr können auch andere Werkstoffe am Aufbau des Kunststoffrohres beteiligt sein. Insbesondere der weiter unten noch näher behandelte Armierungsmantel besteht nach einer Ausführungsform aus einem metallischen Werkstoff. Gemäß einer bevorzugten Ausführungsform der Erfindung besteht lediglich der Armierungsmantel aus einem Nicht-Kunststoff und besteht der Rest des Kunststoffrohres aus Kunststoff.

Ganz besondere Bedeutung kommt im Rahmen der Erfindung einem Kunststoffrohr als Bremsleitung in Kraftfahrzeugen zu. Das Kunststoffrohr bzw. der Kunststoffschlauch dient also bei dieser sehr bevorzugten Ausführungsform als Schlauchleitung für Bremsflüssigkeit im Kraftfahrzeug.

Es liegt im Rahmen der Erfindung, dass das von dem Armierungsmantel umgebene Innenaggregat durch Extrusion, vorzugsweise durch Koextrusion hergestellt wird. Mit anderen Worten wird vorzugsweise das Aggregat aus Innenschicht, Außenschicht und ggf. weiteren bzw. zwischengeschalteten Schichten durch Koextrusion hergestellt.

Es liegt im Rahmen der Erfindung, dass die Innenschicht des Kunststoffrohres aus einem Sperrschichtkunststoff besteht, der eine Sperrfunktion gegenüber einem durch das Kunststoffrohr geleiteten Fluid bzw. gegenüber einem Bestandteil eines durch das Kunststoffrohr geleiteten Fluids aufweist. Eine besondere Ausführungsform der im Rahmen der Erfindung ganz besondere Bedeutung zukommt, ist dadurch gekennzeichnet, dass die Innenschicht aus einem thermoplastischen schmelzextrudierbarem Fluorpolymer besteht, vorzugsweise aus ETFE oder PVDF. ETFE meint Ethylen-tetrafluorethylen-Copolymer und PVDF meint Polyvinylidenfluorid. Gemäß einer sehr bevorzugten Ausführungsform, die sich im Rahmen der Erfindung besonders bewährt hat, besteht die Innenschicht aus ETFE. Die Innenschicht hat insbesondere die Aufgabe eine Sperrwirkung zu übernehmen und eine unerwünschte chemische Beeinflussung der Außenschicht zu verhindern bzw. zu minimieren. Die Außenschicht hat die Funktion eines Druckträgers, mit anderen Worten muss die Außenschicht ausreichend resistent gegenüber hohen Innendrucken sein. Eine sehr bevorzugte Ausführungsform der Erfindung ist dadurch gekennzeichnet, dass die Außenschicht aus Polyamid besteht. Es liegt im Rahmen der Erfindung, dass die Außenschicht aus zumindest einem Kunststoffmaterial aus der Gruppe "Polyamid 6, Polyamid 6/12, Polyamid 11, Polyamid 12" besteht. Sehr bevorzugt ist der Einsatz von Polyamid 12 für die Außenschicht, ganz besonders bevorzugt ist die Verwendung von Polyamid 12 mit hoher Wärmebeständigkeit (PA12 HT) für die Außenschicht.

Die bevorzugte Ausführungsform der Erfindung ist dadurch gekennzeichnet, dass lediglich eine Innenschicht und eine Außenschicht vorhanden ist und dass dieses Innenaggregat aus Innenschicht und Außenschicht von dem Armierungsmantel außen armiert wird.

Nach einer anderen Ausführungsform der Erfindung ist zwischen der Innenschicht und der Außenschicht zumindest eine Zwischenschicht aus einem dritten thermoplastischen schmelzextrudierbarem Kunststoff vorgesehen. Die Zwischenschicht besteht vorzugsweise aus EVOH. EVOH steht für

Ethylen-Vinylalkohol-Copolymer. Es liegt dabei im Rahmen der Erfindung, dass zwischen Innenschicht und Zwischenschicht und/oder zwischen Außenschicht und Zwischenschicht jeweils eine Haftvermittlerschicht zwischengeschaltet ist. Nach sehr bevorzugter Ausführungsform der Erfindung ist zwischen der Innenschicht und der Außenschicht lediglich eine einzige Zwischenschicht vorhanden, die ggf. über Haftvermittlerschichten an Innenschicht und/oder Außenschicht angebunden ist. Gemäß einer Ausführungsform der Erfindung ist eine Innenschicht vorgesehen, die vorzugsweise aus ETFE besteht und an diese Innenschicht schließt außen eine Zusatzschicht aus einem thermoplastischen schmelzextrudierbarem Kunststoff an, welche Zusatzschicht vorzugsweise aus Polyamid, sehr bevorzugt aus Polyamid 12 und besonders bevorzugt aus Polyamid 12 HT besteht. An diese Zusatzschicht schließt zweckmäßigerweise eine Haftvermittlerschicht an und diese Haftvermittlerschicht ist wiederum mit der Zwischenschicht verbunden, die vorzugsweise aus EVOH besteht. Außen auf dieser Zwischenschicht befindet sich eine zweite Haftvermittlerschicht und an diese zweite Haftvermittlerschicht schließt die Außenschicht an, die zweckmäßigerweise aus Polyamid, vorzugsweise aus Polyamid 12 und sehr bevorzugt aus Polyamid 12 HT besteht.

Der Armierungsmantel aus den Armierungssträngen ist zweckmäßigerweise als Geflecht oder als Gewebe ausgebildet. Grundsätzlich kann der Armierungsmantel auch in Form eines Vliesstoffes eingesetzt werden. Es liegt im Rahmen der Erfindung, dass der Armierungsmantel aus einem organischen und/oder anorganischen Material besteht. Es liegt weiterhin im Rahmen der Erfindung, dass der Armierungsmantel über den gesamten Umfang des Kunststoffrohres umläuft bzw. das Kunststoffrohr vollständig umgibt. Nach besonders bevorzugter Ausführungsform der Erfindung ist der Armierungsmantel als Armierungsgeflecht ausgebildet und vorzugsweise sind die Armierungsstränge als metallische Armierungsstränge ausgeführt. Die Armierungsstränge können bandförmig, streifenförmig oder drahtförmig ausgebildet sein. Es liegt im

Rahmen der Erfindung, dass die Armierungsstränge des Armierungsgeflechtes zumindest an ihrer Außenseite, das heißt rohraußenseitig nicht von Kunststoff bedeckt bzw. von Kunststoff ummantelt sind. Vorzugsweise bildet der Armierungsmantel die äußerste Schicht des Kunststoffrohres und es ist keine weitere Schicht mehr auf dem Armierungsmantel angeordnet. Wenn nach bevorzugter Ausführungsform die Innenschicht und die Außenschicht und ggf. weitere Schichten zu dem Innenaggregat koextrudiert werden, wird der Armierungsmantel nicht mit den übrigen Schichten koextrudiert. Vielmehr wird der Armierungsmantel dann vorzugsweise auf das koextrudierte Innenaggregat aus Innenschicht und Außenschicht und ggf. weiteren Schichten nachträglich aufgebracht.

Nach besonders bevorzugter Ausführungsform der Erfindung ist der Armierungsmantel als Armierungsgeflecht mit Armierungssträngen aus Stahl ausgebildet. Mit anderen Worten ist das Innenaggregat, das zumindest die Innenschicht und die Außenschicht aufweist mit einem Stahlgeflecht ummantelt. Vorzugsweise handelt es sich dabei um ein Armierungsgeflecht aus Edelstahl.

Es liegt im Rahmen der Erfindung, dass die Innenschicht eine Schichtdicke von 0,05 bis 0,3 mm, vorzugsweise von 0,07 bis 0,27 mm und sehr bevorzugt von 0,08 bis 0,25 mm aufweist. Es liegt weiterhin im Rahmen der Erfindung, dass die Außenschicht eine Schichtdicke von 0,1 bis 0,5 mm, vorzugsweise von 0,13 bis 0,47 mm, bevorzugt von 0,15 bis 0,45 mm aufweist. Die Dicke bzw. Schichtdicke des Armierungsmantels beträgt zweckmäßigerweise 0,3 bis 0,8 mm, vorzugsweise 0,4 bis 0,7 mm und bevorzugt 0,5 bis 0,6 mm. Die vorstehend angegebenen Schichtdicken für die Innenschicht, die Außenschicht und den Armierungsmantel beziehen sich insbesondere auf ein Kunststoffrohr bzw. auf eine Bremsleitung mit einem Innendurchmesser von 3,5 bis 10,0 mm, vorzugsweise 4 bis 9 mm. Die Schichtdicke des Innenaggregates aus Innenschicht, Außenschicht und ggf. weiteren zwischen Innenschicht und Außenschicht vorhandenen Schichten beträgt zweckmäßigerweise 0,45 bis 0,75 mm, bevorzugt 0,5 bis 0,7 mm und sehr bevorzugt 0,55 bis 0,65 mm.

Bei einer bevorzugten Ausführungsform der Erfindung hat die Innenschicht, die vorzugsweise aus ETFE besteht eine Schichtdicke von 0,1 bis 0,3 mm, bevorzugt von 0,2 mm bzw. etwa 0,2 mm. Bei dieser Ausführungsform schließt an die Innenschicht unmittelbar die Außenschicht an, die zweckmäßigerweise aus Polyamid, vorzugsweise aus Polyamid 12 und sehr bevorzugt aus Polyamid 12 HT besteht. Es liegt im Rahmen der Erfindung, dass diese Außenschicht eine Schichtdicke von 0,3 bis 0,5 mm, vorzugsweise 0,4 mm bzw. etwa 0,4 mm hat. An die Außenschicht schließt direkt der Armierungsmantel an, der bei dieser Ausführungsform zweckmäßigerweise eine Schichtdicke von 0,45 bis 0,65 mm und bevorzugt von etwa 0,56 mm hat. Der Innendurchmesser dieses Kunststoffrohres beträgt beispielsweise 4,5 bis 5,0 mm.

Bei einer anderen Ausführungsform der Erfindung besteht die Innenschicht vorzugsweise aus ETFE und hat zweckmäßigerweise eine Schichtdicke von 0,05 bis 0,15 mm, vorzugsweise von 0,1 mm bzw. etwa 0,1 mm. An diese Innenschicht schließt eine Zusatzschicht an, die bevorzugt aus Polyamid und sehr bevorzugt aus Polyamid 12 bzw. Polyamid 12 HT besteht. Es liegt im Rahmen der Erfindung, dass diese Zusatzschicht eine Schichtdicke von 0,05 bis 0,15 mm, vorzugsweise von 0,1 mm bzw. etwa 0,1 mm aufweist. Die Zusatzschicht ist außen mit einer Haftvermittlerschicht verbunden, die eine Schichtdicke von 0,03 bis 0,07 mm, vorzugsweise von 0,05 bzw. etwa 0,05 mm haben mag. An diese erste Haftvermittlerschicht schließt bei diesem Ausführungsbeispiel eine Zwischenschicht an, die bevorzugt aus EVOH besteht und zweckmäßigerweise eine Schichtdicke von 0,05 bis 0,15 mm, bevorzugt von 0,10 mm bzw. etwa 0,10 mm aufweist. An die Zwischenschicht schließt dann wieder eine zweite Haftvermittlerschicht an, die eine der ersten Haftvermittlerschicht entsprechende Schichtdicke aufweisen kann. Mit der zweiten Haftvermittlerschicht ist eine Außenschicht verbunden, die zweckmäßigerweise aus Polyamid, vorzugsweise aus Polyamid 12 und bevorzugt aus Polyamid 12 HT besteht. Es liegt im Rahmen der Erfindung, dass diese Außenschicht bei dieser Ausführungsform eine Schichtdicke von 0,1 bis 0,3 mm, vorzugsweise von 0,2 mm bzw. etwa 0,2 mm hat. Die Dicke bzw. Schichtdicke des Armierungsmantels, der auf die Außenschicht aufgebracht ist, beträgt bevorzugt 0,45 bis 0,65 mm und sehr bevorzugt 0,56 mm bzw. etwa 0,56 mm. Der Innendurchmesser des Kunststoffrohres beträgt 4,5 bis 5,0 mm.

Die Erfindung betrifft weiterhin ein Verfahren zur Herstellung eines Kunststoffrohres gemäß Patentanspruch 9. Außerdem betrifft die Erfindung die Verwendung eines Kunststoffrohres als Bremsleitung in Kraftfahrzeugen, wobei das Kunststoffrohr zumindest eine schmelzextrudierte Schicht aus einem thermoplastischen schmelzextrudierbarem Kunststoff aufweist und wobei auf diese schmelzextrudierte Schicht ein Armierungsmantel aus sich kreuzenden und/oder sich überlappenden Armierungssträngen aufgebracht ist. Nach einer Ausführungsform wird ein Kunststoffrohr mit einer inneren ETFE-Schicht und mit einem auf diese ETFE-Schicht aufgebrachtem Armierungsmantel als Bremsleitung in Kraftfahrzeugen verwendet.

Der Erfindung liegt die Erkenntnis zugrunde, dass ein erfindungsgemäßes Kunststoffrohr sich durch eine überraschend hohe Innendruckbeständigkeit vor allem bei hohen Temperaturen auszeichnet. Aus diesem Grunde ist ein erfindungsgemäßes Kunststoffrohr insbesondere als Bremsleitung in Kraftfahrzeugen geeignet. Das erfindungsgemäße Kunststoffrohr bzw. die Kunststoffschichten des Innenaggregates dieses Kunststoffrohres können auf einfache Weise durch Koextrusion hergestellt werden und deshalb ist eine kontinuierliche Herstellung mit hoher Geschwindigkeit möglich. Bei den koextrudierten Schichten des Kunststoffrohres können durch entsprechende Auswahl der Kunststoffe für die einzelnen Schichten die Rohreigenschaften bzw. Schlaucheigenschaften gezielt eingestellt werden. Dabei ist es möglich, für das erfindungsgemäße Kunststoffrohr relativ günstige Werkstoffe auszuwählen und dabei nichtsdestoweniger hervorragende Eigenschaften des Kunststoffrohres zu erreichen. Hervorzuheben ist auch, dass ein erfindungsgemäßes Kunststoffrohr bei vergleichbaren mechanischen und chemischen Eigenschaften dünnwandiger ausgebildet werden kann, als ein aus dem Stand der Technik bekanntes Kunststoffrohr für Bremsleitungen in Kraftfahrzeugen.

Nachfolgend wird die Erfindung anhand einer lediglich ein Ausführungsbeispiel darstellenden Zeichnung näher erläutert. Es zeigen in schematischer Darstellung:
Fig. 1 Einen Querschnitt durch eine aus dem Stand der Technik bekannte Bremsleitung und
Fig. 2 einen Querschnitt durch ein erfindungsgemäßes Kunststoffrohr für die Verwendung als Bremsleitung in einem Kraftfahrzeug.

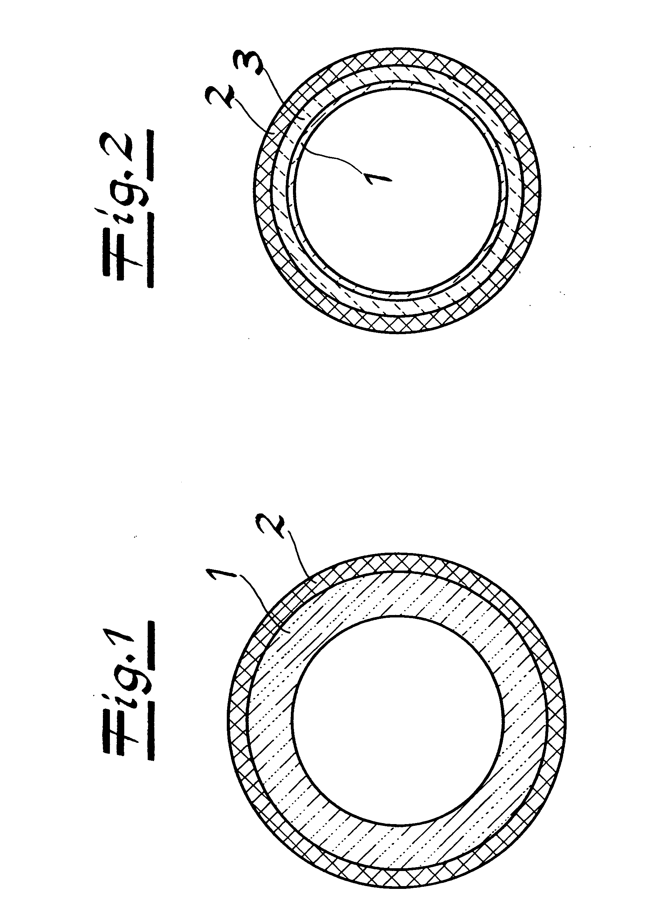

Die beiden in den Fig. 1 und 2 dargestellten Kunststoffrohre haben im Ausführungsbeispiel den gleichen Innendurchmesser von beispielsweise 4,8 mm. Das in Fig. 1 dargestellte aus dem Stand der Technik bekannte Kunststoffrohr weist eine relativ dicke Innenschicht 1 aus PTFE auf. Die Dicke dieser Innenschicht beträgt im Ausführungsbeispiel 0,75 mm. Diese Innenschicht 1 des bekannten Kunststoffrohres wird von einem Armierungsmantel 2 aus Stahlgeflecht umgeben. Die Herstellung dieses bekannten Kunststoffrohres ist verhältnismäßig aufwendig und kostspielig.

Demgegenüber ist in der Fig. 2 ein erfindungsgemäßes Kunststoffrohr dargestellt. Es ist zunächst eine Innenschicht 1 aus ETFE vorgesehen, die im Ausführungsbeispiel eine Schichtdicke von 0,2 mm aufweist. Daran schließt direkt bzw. unmittelbar eine Außenschicht 3 aus Polyamid 12 HT an, die im Ausführungsbeispiel eine Dicke von 0,4 mm hat. Unmittelbar an diese Außenschicht 3 schließt bei diesem Kunststoffrohr der Armierungsmantel 2 an, der ebenfalls aus einem die Außenschicht 3 ummantelnden Stahlgeflecht besteht. Die Dicke des Stahlgeflechtes ist im Ausführungsbeispiel nach den Fig. 1 und 2 jeweils gleich und beträgt 0,56 mm. Es ist erkennbar, dass das erfindungsgemäße Kunststoffrohr bei gleichem Innendurchmesser insgesamt dünnwandiger ausgebildet werden kann, als das in Fig. 1 dargestellte Kunststoffrohr nach dem Stand der Technik. Nichtsdestoweniger werden vergleichbare oder sogar noch bessere mechanische und chemische Eigenschaften erzielt.

## Patentansprüche

1. Kunststoffrohr, insbesondere als Bremsleitung in Kraftfahrzeugen, mit einer Innenschicht (1) aus einem ersten thermoplastischen schmelzextrudierbarem Kunststoff, mit einer Außenschicht (3) aus einem zweiten thermoplastischen schmelzextrudierbarem Kunststoff und mit einem die Außenschicht (3) umgebenden Armierungsmantel (2) aus sich kreuzenden und/oder sich überlappenden Armierungssträngen.

2. Kunststoffrohr nach Anspruch 1, wobei die Innenschicht (1) aus einem thermoplastischen schmelzextrudierbarem Fluorpolymer besteht, vorzugsweise aus ETFE und/oder PVDF.

3. Kunststoffrohr nach einem der Ansprüche 1 oder 2, wobei die Außenschicht (3) aus einem Polyamid besteht.

4. Kunststoffrohr nach einem der Ansprüche 1 bis 3, wobei zwischen Innenschicht (1) und Außenschicht (3) zumindest eine Zwischenschicht aus einem dritten thermoplastischen schmelzextrudierbarem Kunststoff, vorzugsweise aus EVOH vorgesehen ist.

5. Kunststoffrohr nach einem der Ansprüche 1 bis 4, wobei der Armierungsmantel (2) als Armierungsgeflecht aus den Armierungssträngen ausgebildet ist und wobei vorzugsweise metallische Armierungsstränge das Armierungsgeflecht bilden.

6. Kunststoffrohr nach Anspruch 5, wobei die Armierungsstränge aus Stahl, vorzugsweise aus Edelstahl bestehen.

7. Kunststoffrohr nach einem der Ansprüche 1 bis 6, wobei die Innenschicht (1) eine Schichtdicke von 0,05 bis 0,3 mm, vorzugsweise von 0,08 bis 0,25 mm aufweist.

8. Kunststoffrohr nach einem der Ansprüche 1 bis 7, wobei die Außenschicht (3) eine Schichtdicke von 0,1 bis 0,5 mm, vorzugsweise von 0,15 bis 0,45 mm aufweist.

9. Verfahren zur Herstellung eines Kunststoffrohres nach einem der Ansprüche 1 bis 8, wobei eine Innenschicht (1) aus einem ersten thermoplastischen schmelzextrudierbarem Kunststoff und eine Außenschicht (3) aus einem zweiten thermoplastischen schmelzextrudierbarem Kunststoff zu einem Innenaggregat koextrudiert werden und wobei ein Armierungsmantel (2) aus sich kreuzenden und/oder sich überlappenden Armierungssträngen auf das koextrudierte Innenaggregat aufgebracht wird.

10. Verwendung eines Kunststoffrohres als Bremsleitung in Kraftfahrzeugen, wobei das Kunststoffrohr zumindest eine schmelzextrudierte Schicht aus einem thermoplastischen schmelzextrudierbarem Kunststoff aufweist und wobei auf diese schmelzextrudierte Schicht ein Armierungsmantel aus sich kreuzenden und/oder sich überlappenden Armierungssträngen aufgebracht ist.

## Geänderte Patentansprüche

### Geänderte Patentansprüche gemäss Regel 86(2) EPÜ.

**1.** Kunststoffrohr, insbesondere als Bremsleitung in Kraftfahrzeugen, mit einer Innenschicht (1) aus einem ersten thermoplastischen schmelzextrudierbarem Kunststoff, mit einer Außenschicht (3) aus einem zweiten thermoplastischen schmelzextrudierbarem Kunststoff und mit einem die Außenschicht (3) umgebenden Armierungsmantel (2) aus sich kreuzenden und/oder sich überlappenden Armierungssträngen,
wobei die Innenschicht (1) aus einem thermoplastischen schmelzextrudierbarem Fluorpolymer besteht,
wobei die Außenschicht (3) aus einem Polyamid besteht,
und wobei der Armierungsmantel (2) als Armierungsgeflecht aus metallischen Armierungssträngen ausgebildet ist.

**2.** Kunststoffrohr nach Anspruch 1, wobei die Innenschicht (1) aus ETFE und/oder PVDF besteht.

**3.** Kunststoffrohr nach Anspruch 1 oder 2, wobei zwischen Innenschicht (1) und Außenschicht (3) zumindest eine Zwischenschicht aus einem dritten thermoplastischen schmelzextrudierbarem Kunststoff, vorzugsweise aus EVOH vorgesehen ist.

**4.** Kunststoffrohr nach einem der Ansprüche 1 bis 3, wobei die Armierungsstränge aus Stahl, vorzugsweise aus Edelstahl bestehen.

**5.** Kunststoffrohr nach einem der Ansprüche 1 bis 4, wobei die Innenschicht (1) eine Schichtdicke von 0,05 bis 0,3 mm, vorzugsweise von 0,08 bis 0,25 mm aufweist.

**6.** Kunststoffrohr nach einem der Ansprüche 1 bis 5, wobei die Außenschicht (3) eine Schichtdicke von 0,1 bis 0,5 mm, vorzugsweise von 0,15 bis 0,45 mm aufweist.

**7.** Verfahren zur Herstellung eines Kunststoffrohres nach einem der Ansprüche 1 bis 6, wobei eine Innenschicht (1) aus einem ersten thermoplastischen schmelzextrudierbarem Kunststoff und eine Außenschicht (3) aus einem zweiten thermoplastischen schmelzextrudierbarem Kunststoff zu einem Innenaggregat koextrudiert werden und wobei ein Armierungsmantel (2) aus sich kreuzenden und/oder sich überlappenden Armierungssträngen auf das koextrudierte Innenaggregat aufgebracht wird.

**8.** Verwendung eines Kunststoffrohres nach einem der Ansprüche 1 bis 6, als Bremsleitung in Kraftfahrzeugen.
